# EUROPÄISCHE PATENTSCHRIFT

(11) **EP 4 149 790 B1**
(45) Veröffentlichungstag und Bekanntmachung des Hinweises auf die Patenterteilung: **25.06.2025**
(21) Anmeldenummer: 21722866.7
(22) Anmeldetag: 30.04.2021
(51) Int. Cl.: B60L 53/14, B60L 53/66, H02J 7/00, B60L 53/63, H01M 10/44, H01M 10/42, H02J 1/14, H04L 12/10, H04B 3/54

(54) **LADESTATION FÜR ELEKTROFAHRZEUGE**
CHARGING STATION FOR ELECTRIC VEHICLES
STATION DE CHARGE POUR DES VÉHICULES ÉLECTRIQUES

(30) Priorität: 15.05.2020 DE 102020113235
(43) Veröffentlichungstag der Anmeldung: 22.03.2023
(73) Patentinhaber: Juice Technology AG, 8184 Bachenbülach (CH)
(72) Erfinder: ERNI, Christoph, 8185 Winkel (CH)
(74) Vertreter: Caspary, Karsten
(86) Internationale Anmeldenummer: PCT/EP2021/061429
(87) Internationale Veröffentlichungsnummer: WO 2021/228587

(56) Entgegenhaltungen:
- EP-A1- 2 819 265
- DE-A1- 102015 102 449
- DE-A1- 102017 124 469
- GB-A- 2 576 719
- US-A1- 2011 140 659
- US-A1- 2012 131 360
- US-A1- 2012 245 750
- US-A1- 2014 191 721
- US-B1- 10 183 586
- US-B2- 9 290 104
- US-B2- 9 762 078
- US-B2- 9 876 353

## Beschreibung

Die vorliegende Erfindung betrifft eine Vorrichtung zum Laden von Elektrofahrzeugen nach dem Oberbegriff des Anspruchs 1.

Mit der zunehmenden Durchsetzung von Elektrofahrzeugen oder Hybridfahrzeugen im weltweiten Kraftfahrzeugmarkt steigen auch die technischen Anforderungen an die Betreiber von Stromversorgungsnetzen und insbesondere von öffentlichen oder privaten Ladestationen. Stromversorgungsnetze bzw. Elektrizitätsversorgungsnetze sind empfindliche Gebilde, die der Versorgung der Verbraucher mit elektrischer Energie dienen und dabei Kraftwerke und andere Energieumwandler miteinander verbinden. Durch exakte Überwachung von Angebot und Nachfrage wird versucht, Netzverluste zu verringern, wobei die Netzfrequenz von 50 Hz in Europa bei einer Netzspannung von 230 V eingehalten wird.

Um bei den begrenzten Ressourcen der Energieversorgungsunternehmen ein effizientes Lastmanagement zu ermöglichen, verlangen immer mehr Energieversorgungsunternehmen die Möglichkeit, Ladestationen von Elektrofahrzeugen oder sogar einzelne für Elektrofahrzeuge dedizierte Steckdosen vom Stromversorgungsnetz abzukoppeln. Dieser Vorgang wird auch als Lastabwurf bezeichnet.

Eine Möglichkeit des Ab- und Anschaltens von bestimmten elektrischen Verbrauchern wie z. B. elektrische Boileranlagen oder Fotovoltaikanlagen stellt die sogenannte Rundsteuertechnik dar, bei der es sich um eine Fernsteuerung über das vorhandene Stromversorgungsnetz handelt. Dabei werden Steuersignale über das Stromnetz ausschließlich von einem zentralen Rundsteuersender an dezentrale Rundsteuerempfänger übermittelt. Die Übertragung der Steuerbefehle erfolgt durch Impulsfolgen im Niederfrequenzbereich, die der normalen Netzspannung mit einer vorbestimmten Amplitude überlagert werden, wobei durch das Senden von bestimmten Codes ein Impulstelegramm entsteht.

Ein solches abruptes Abschalten mittels der oben genannten Rundsteuertechnik von Ladestationen und oder Steckdosen unter Volllast würde bei den relativ hohen Strömen, die zum Laden von Elektrofahrzeugen erforderlich sind, zu gefährlichen Lichtbögen in den mechanischen Schaltelementen und folglich möglicherweise zu Beschädigungen der Leiterkontakte oder anderen Bauteilen in den Ladestationen oder gar in den Elektrofahrzeugen selbst führen.

US 2011/140659 A1 offenbart Vorrichtung zum Laden von Elektrofahrzeugen und mit einer Funktion zum Lastabwurf, die einen Anschluss an ein Stromversorgungsnetz, mindestens einen Ladeanschluss für mindestens ein Elektrofahrzeug, eine zentrale Verarbeitungseinheit aufweist, wobei die zentrale Verarbeitungseinheit dazu eingerichtet ist, ein wahlweises Reduzieren des Ladestroms eines an dem mindestens einen Ladeanschluss angeschlossenen Elektrofahrzeugs innerhalb einer vorbestimmten Zeitdauer zu bewirken, und ein Relaiselement. DE 10 2015 102449 A1 offenbart Vorrichtung zum Laden von Elektrofahrzeugen und mit einer Funktion zum kontrollierten Lastabwurf, die einen Anschluss an ein Stromversorgungsnetz, mindestens einen Ladeanschluss für mindestens ein Elektrofahrzeug, eine zentrale Verarbeitungseinheit, und eine Empfängereinrichtung aufweist. US 2014/191721 A1 Vorrichtung zum Laden von Elektrofahrzeugen und mit einer Funktion zum kontrollierten Lastabwurf die einen Anschluss an ein Stromversorgungsnetz, mindestens einen Ladeanschluss für mindestens ein Elektrofahrzeug, und eine zentrale Verarbeitungseinheit, und eine Empfängereinrichtung aufweist, wobei die zentrale Verarbeitungseinheit dazu eingerichtet ist, ein wahlweises Reduzieren des Ladestroms eines an dem mindestens einen Ladeanschluss angeschlossenen Elektrofahrzeugs innerhalb einer vorbestimmten Zeitdauer zu bewirken.

Es ist daher die Aufgabe der vorliegenden Erfindung, eine Vorrichtung zum Laden von Elektrofahrzeugen bereitzustellen, die die oben genannten Nachteile zumindest teilweise überwindet und einen möglichst beschädigungsfreien, kontrollierten und im Wesentlichen risikolosen Lastabwurf und ein optimiertes Lastmanagement beim Laden von Elektrofahrzeugen ermöglicht.

Diese Aufgabe wird durch den Gegenstand des Anspruchs 1 gelöst. Vorteilhafte Ausführungsformen sind in den abhängigen Ansprüchen beschrieben.

Erfindungsgemäß wird eine Vorrichtung zum Laden von Elektrofahrzeugen bereitgestellt, die einen Anschluss an ein Stromversorgungsnetz, mindestens einen Ladeanschluss für mindestens ein Elektrofahrzeug, eine zentrale Verarbeitungseinheit, eine Empfängereinrichtung, die als Rundsteuerempfänger ausgebildet und dazu eingerichtet ist, ein niederfrequentes Rundsteuersignal eines Rundsteuersenders in einem Stromversorgungsnetz (6) zu empfangen, und ein Relaiselement aufweist, das dazu eingerichtet ist, ein Steuersignal der Empfängereinrichtung zu verarbeiten und an die zentrale Verarbeitungseinheit weiterzugeben, wobei die zentrale Verarbeitungseinheit dazu eingerichtet ist, ein wahlweises Reduzieren des Ladestroms eines an dem mindestens einen Ladeanschluss angeschlossenen Elektrofahrzeugs innerhalb einer vorbestimmten Zeitdauer zu bewirken. Damit ist ein besonders schonendes, kontrolliertes, lastfreies und damit optimiertes Abschalten bzw. vom Netz Nehmen der zu ladenden Elektrofahrzeuge möglich. Durch das Verzichten auf das abrupte Abwerfen kann den Elektrofahrzeugen speziell und schonend signalisiert werden, dass sie nun interne Maßnahmen, die mit dem Reduzieren bzw. Abschalten des Ladestroms einhergehen, einleiten können. Des Weiteren können durch den Einsatz von bewährten Signalisierungstechnologien Kosten reduziert werden. Eine besondere Installation von zusätzlichen Kommunikationsgeräten ist damit nicht erforderlich.

Vorteilhafterweise erfolgt das Reduzieren des Ladestroms für jedes an dem mindestens einen Ladeanschluss angeschlossene Elektrofahrzeug unterschiedlich. Damit wird ein kaskadenartiges Herunterfahren der Ladestationen ermöglicht, was die Gefahr von Beschädigungen weiter reduziert. Dabei kann im Rahmen eines optimierten Lastmanagements insbesondere auf die unterschiedlichen vorhandenen Ladeströme Rücksicht genommen werden.

Mit besonderem Vorteil ist das Relaiselement ein Halbleiterrelais. Halbleiterrelais (solid-state relays; SSR) haben gegenüber elektromechanischen Relais (EMRs) den Vorteil, dass sie kleiner sind, wodurch sich eine deutliche Platzeinsparung aufgedruckten Leiterplatten ergibt, dass sie aufgrund der fehlenden beweglichen Bauteile eine bessere Systemzuverlässigkeit aufweisen, dass sie keine Anforderungen an die Ansteuerelektronik stellen und prellfrei schalten und insbesondere dass sie geringere Ausgangsspannungen aufweisen. Denn beispielsweise können mit elektromechanischen Relais zuverlässig nur Spannungen von größer als 10 V geschaltet werden.

Mit weiterem Vorteil ist die zentrale Verarbeitungseinheit ein Mikrocontroller. Derartige Bauelemente sind flexibel programmierbar, gut verfügbar und günstig.

Bevorzugt stellt die Empfängereinrichtung einen potentialfreien Kontakt bereit, der eindeutig eine positive oder negative Signalisierung angibt, d.h. ob ja oder nein, ob 0 oder 1. Die Empfängereinrichtung kann weiterhin ein Rundsteuerempfänger sein, der zusätzlich dazu eingerichtet ist, ein kabelgebundenes Steuersignal über ein Leitungsnetz gemäß einer Trägerfrequenztechnik wie Powerline Communication (PLC) zu empfangen, oder der zusätzlich oder alternativ dazu eingerichtet sein, ein kabelloses Steuersignal über ein Funknetz zu empfangen. Das Steuersignal kann beispielsweise ein niederfrequentes Rundsteuersignal im Frequenzbereich von 110 Hz bis etwa 2000 Hz im Stromversorgungsnetz sein. In diesem Frequenzbereich existiert eine Vielzahl von vorbestimmten Impulsfolgen, die beispielsweise in entsprechenden Bibliotheken vorhanden und bei den meisten Energieversorgungsunternehmen verfügbar sind.

Weiterhin ist bevorzugt, dass ein Ausgangssignal des Relaiselements eine Spannung von 3,5 V nicht überschreitet. Für die Ansteuerung von Halbleiterbauelementen wie dem bevorzugten Mikrocontroller mit den üblichen Steuerspannungen von 3 V ist deshalb kein weiteres Bauelement notwendig, wodurch die Kosten für die Vorrichtung niedrig gehalten werden können.

Mit Vorteil ist die zentrale Verarbeitungseinheit räumlich getrennt von dem mindestens einen Ladeanschluss ausgebildet und/oder ist der mindestens eine Ladeanschluss als Wallbox ausgebildet. Damit muss nicht jede einzelne Ladestation bzw. jede einzelne Aufladedose eine eigene zentrale Verarbeitungseinheit aufweisen, sondern es reicht pro Gebäude eine zentrale Verarbeitungseinheit aus, die für das Strommanagement sämtlicher angeschlossener Energieverbraucher und Energieerzeuger verantwortlich ist. Ein anschauliches Beispiel dafür ist eine Park- oder Tiefgarage mit einer Mehrzahl von Ladestationen für entsprechend viele Elektrofahrzeuge als Energieverbraucher und optional einer auf dem Dach vorhandenen Fotovoltaikanlage.

Die Vorrichtung ist dazu eingerichtet, den Ladestrom an jedem Ladeanschluss innerhalb der vorbestimmten Zeitdauer geordnet auf Null zu reduzieren. Das vollständige Reduzieren entspricht einem kontrollierten Lastabwurf, es ist allerdings auch möglich, den Ladestrom je nach Anforderung des Lastmanagements auf einen vorbestimmten Restladestrom herunter zu regeln. Mit der vollständigen Reduktion des Ladestroms auf Null ist ein schonendes, lastfreies Abschalten der Elektrofahrzeuge vom Stromversorgungsnetz möglich. Eine Beschädigung der beteiligten Kontakt- und Schaltelemente ist damit weitgehend ausgeschlossen.

Die Aufgabe des Lastmanagements kann von der erfindungsgemäßen Vorrichtung insbesondere dann übernommen werden, wenn die zentrale Verarbeitungseinheit dazu eingerichtet ist, weitere Energieverbraucher und/oder Energieerzeuger zu steuern. Damit ist die erfindungsgemäße Vorrichtung in der Lage, beispielsweise Boileranlagen oder Fotovoltaikanlagen kontrolliert herunter zu regeln oder auch vom Stromnetz zu nehmen.

Weitere Eigenschaften und Vorteile der vorliegenden Erfindung ergeben sich aus den beigefügten Figuren von Ausführungsbeispielen, in denen:
- Fig. 1: eine schematische Darstellung einer bevorzugten Ausführungsform der erfindungsgemäßen Vorrichtung und
- Fig. 2: einen detaillierten Ausschnitt der Darstellung nach Fig. 1 zeigt.

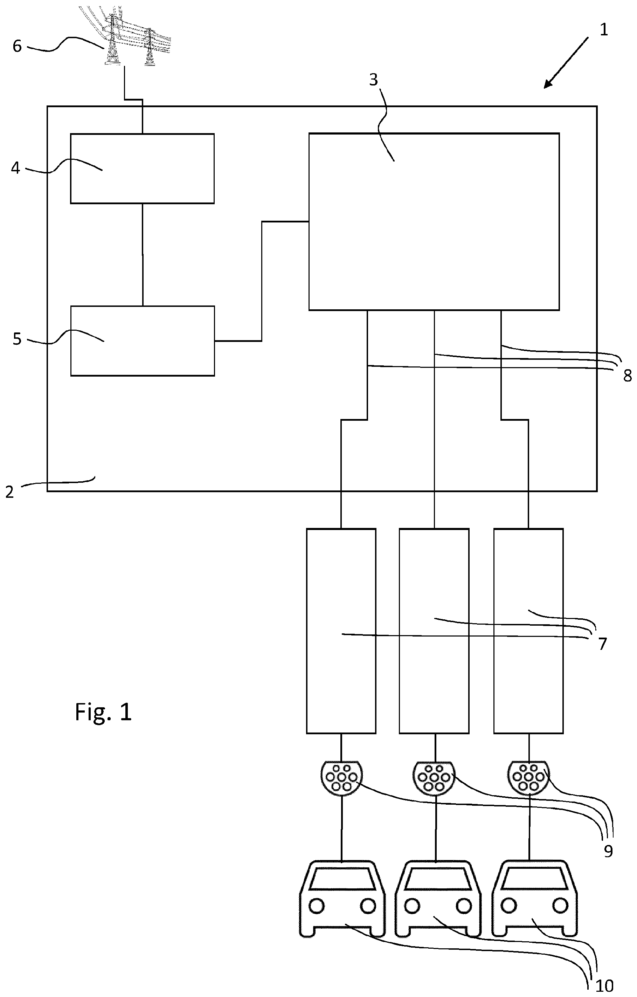

Fig. 1 zeigt schematisch die erfindungsgemäße Vorrichtung zum Laden von Elektrofahrzeugen in einer bevorzugten Ausführungsform. Die Vorrichtung 1 umfasst ein Gehäuse 2, in dem eine zentrale Verarbeitungseinheit 3, die in der dargestellten Ausführungsform als Mikrocontroller ausgebildet ist, eine Empfängereinrichtung, die als Rundsteuerempfänger 4 ausgebildet ist, und ein hier als Halbleiterrelais ausgebildetes Relaiselement 5 angeordnet sind. Des Weiteren umfasst die Vorrichtung 1 eine Mehrzahl von Ladeanschlüssen 7 (hier drei Ladeanschlüsse), die außerhalb des Gehäuses 2 angeordnet sind. In der hier dargestellten Ausführungsform sind die Ladeanschlüsse 7 als Wallboxen ausgebildet, die über Typ-2-Stecker 9 jeweils zum Anschluss einen ein Elektrofahrzeug 10 verfügen. Es versteht sich, dass die Ladeanschlüsse 7 auch innerhalb des Gehäuses 2 angeordnet sein können. Dies wird insbesondere dann der Fall sein, wenn sich die erfindungsgemäße Vorrichtung als Einzelinstallation mit einem Ladeanschluss für nur ein Elektrofahrzeug in der Garage eines Einfamilienhauses befindet. Die hier dargestellte Ausführungsform orientiert sich jedoch an dem Beispiel einer Park- oder Tiefgarage, die eine Ladestation mit einer großen Mehrzahl von Ladeanschlüssen 7 zum Aufladen einer entsprechenden Anzahl von Elektrofahrzeugen 10 aufweist.

Der Rundsteuerempfänger 4 ist mit dem Stromversorgungsnetz 6 eines Energieversorgungsunternehmens verbunden, das einen (nicht dargestellten) Rundsteuersender aufweist, der zur Steuerung des Stromversorgungsnetzes 6 ein niederfrequentes Rundsteuersignal aussendet. Der Rundsteuerempfänger 4 leitet die Steuerinformationen des Rundsteuersenders durch Filterung des als Impulstelegramm geschickten Rundsteuersignals ab und gibt ein Steuersignal aus. Alternativ oder zusätzlich kann die Empfängereinrichtung auch eine Trägerfrequenzeinrichtung sein, die beispielsweise ein PLC-Signal über das Stromnetz empfängt und ein Steuersignal an einem potentialfreien Kontakt ausgibt. Es ist ebenfalls möglich, dass die Empfängereinrichtung das Signal von außen über ein Funknetz empfängt wie z.B. 4G, LTE, 5G, WLAN oder dergleichen.

Zwischen Empfängereinrichtung 4 und zentraler Verarbeitungseinheit 3 ist das Relaiselement 5 angeordnet, das in der hier dargestellten Ausführungsform als Halbleiterrelais ausgebildet ist. Das Relaiselement 5 verarbeitet das von der Empfängereinrichtung 4 ausgegebene Steuersignal und signalisiert wiederum so der zentralen Verarbeitungseinheit 3, dass der Ladestrom für die an den entsprechenden Ladeanschlüssen 7 angeschlossenen Elektrofahrzeuge 10 zu reduzieren ist. Das Steuersignal aus der Empfängereinrichtung 4 kann unterschiedliche Impulsfolgen bzw. Codes enthalten, nicht nur den Code für den sofortigen Lastabwurf, also das Herunterfahren bzw. Abschalten aller Ladevorgänge, sondern beispielsweise für das Reduzieren oder Erhöhen der beziehbaren Leistung auf einen bestimmten Wert. Dazu kann in der hier dargestellten bevorzugten Ausführungsform der Rundsteuersender aus dem Stromversorgungsnetz 6 unterschiedliche Signale auf verschiedenen Frequenzen aussenden, die in einer entsprechenden Bibliothek definiert sind und die entsprechend nach Filterung durch den Rundsteuerempfänger 4 als Impulsfolgen in dem Relaiselement 5 ausgewertet und in geeigneter Weise an die zentrale Verarbeitungseinheit weitergeleitet werden.

Bei der hier dargestellten Ausführungsform ist beispielhaft der Anwendungsfall beschrieben, bei dem der Rundsteuersender das Signal zum sofortigen Lastabwurf aller angeschlossenen Verbraucher aussendet. Dies wird über den potentialfreien Kontakt am Ausgang des Rundsteuerempfängers ausgegeben, d. h. dass entweder das volle Versorgungssignal anliegt und damit das normale Laden angezeigt ist, oder dass kein Signal anliegt und damit angezeigt ist, dass das Laden nicht (mehr) erlaubt ist und entsprechend alle Ladeanschlüsse auf Null reduziert werden sollen.

In der als Mikrocontroller ausgebildeten zentralen Verarbeitungseinheit 3 erfolgt die Verarbeitung des beispielhaften Signals für den sofortigen Lastabwurf derart, dass nun die Ausgänge bzw. Leitungen 8 zu den Ladeanschlüssen 7 mit entsprechenden Signalen belegt werden, so dass jeder Ladestrom pro Ladeanschluss 7 innerhalb einer bestimmten Zeitdauer, z. B. 10 Sekunden, bis auf Null reduziert wird. Damit ist ein kontrollierter Lastabwurf gewährleistet, weil in den Wallboxen 7 bzw. Ladesteckern keine Lichtbögen an den mechanischen Schaltern oder Kontakten entstehen und somit Schäden an den Bauelementen vermieden werden.

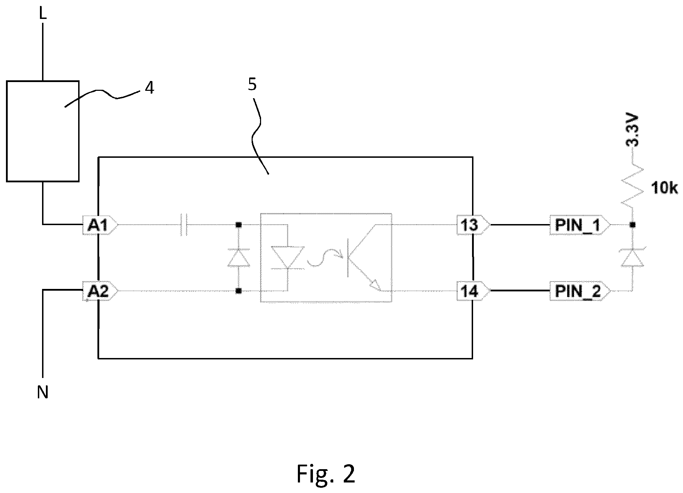

Fig. 2 zeigt einen Ausschnitt der Darstellung aus Fig. 1, wobei der Rundsteuerempfänger 4, das Relaiselement 5 sowie der Anschluss an die zentrale Verarbeitungseinheit 3 ausführlicher abgebildet sind. Der Rundsteuerempfänger 4 fungiert als eine Art Schalter, der die Impulsfolge des Rundsteuersignals an seinen potentialfreien Ausgängen ausgibt, im vorliegenden Fall also volles Signal oder Null. A1 und A2 sind Eingänge des Halbleiterrelais 5, das in der hier dargestellten Ausführungsform ein Produkt der Fa. Omron mit der Bezeichnung G3RV-SR500-D AC230 ist. Die Kennung D AC230 in der Produktbezeichnung zeigt an, dass es sich um einen Gleichstromausgang (DC Output) bei einer Eingangswechselspannung von bis 230 V handelt. Am Relaiskontakt A1 liegt folglich das volle 230 V-Wechselstromsignal des Rundsteuerempfängers 4 an, auf den Eingang A2 ist der Neutralleiter geschaltet.

Innerhalb des Relaiselements 5 sind elektronische Bauelemente dargestellt, wobei die hier abgebildeten nur eine symbolische Auswahl bilden. In Fig. 2 sind lediglich die hier wesentlichen Ausgänge 13 und 14 des Halbleiterrelais 5 gezeigt, die mit dem durch PIN_1 und PIN_2 repräsentierten Logikeingang des Mikrocontrollers bzw. der zentralen Verarbeitungseinheit verbunden sind. Damit ergibt sich folgende Schaltlogik für den beispielhaften Lastabwurf:

| Spannung an A1/A2: | Eingang Verarbeitungseinheit*:* | Ladestrom an Ladeanschluss: |
|---|---|---|
| 230 VAC | 0 V | ja |
| 0 VAC | 3,3 V | nein |

Diese 0/1-Entscheidung für den Lastabwurf kann auch mit einer anderen Programmierung in der zentralen Verarbeitungseinheit 3 umgesetzt werden, d. h. die Erfindung ist nicht auf das hier dargestellte Ausführungsbeispiel beschränkt. Beispielsweise kann mehr als ein Logikeingang des Mikrocontrollers beschaltet werden. So können andere Signalfolgen als Ausgangssignal der Empfängereinrichtung 4 über das Relaiselement 5 in die zentrale Verarbeitungseinheit 3 gelangen und dort verarbeitet werden, z. B. eine Lasthalbierung, ein Neustart, ein gleichmäßiges Hochfahren von Ladeströmen mit jeweils unterschiedlichen Zeitdauern oder dergleichen mehr.

Alternativ zu dem in der bevorzugten Ausführungsform verwendeten Halbleiterrelais 5 der Fa. Omron können auch andere gleichartige Halbleiterbauelemente verwendet werden, um die Signale der Empfängereinrichtung 4 auszuwerten und entsprechende Steuersignale an die zentrale Verarbeitungseinheit 3 weiterzuleiten.

Die Ladeanschlüsse 7, die in der hier dargestellten Ausführungsform über die Leitungen 8 mit der zentralen Verarbeitungseinheit 3 verbunden sind, werden von dieser derart angesteuert, dass sie den Ladestrom für die angehängten Elektrofahrzeuge 10 für ca. zehn Sekunden geordnet auf Null herunter regeln und die Relaiskontakte der drei Phasen und des Nullleiters nachfolgend öffnen. Dadurch wird das Entstehen eines Lichtbogens wie beim abrupten Abschalten z. B. durch einen Schütz vermieden. Die mechanischen Kontakte der Ladeanschlüsse 7 oder der verbundenen Elektrofahrzeuge nehmen damit keinen Schaden.

Mit dem Gegenstand der Erfindung wurde eine Vorrichtung zum Laden von Elektrofahrzeugen bereitgestellt, die einen beschädigungsfreien, kontrollierten und im Wesentlichen risikolosen Lastabwurf und damit ein optimiertes Lastmanagement beim Laden von Elektrofahrzeugen ermöglicht.

## Patentansprüche

1. Vorrichtung (1) zum Laden von Elektrofahrzeugen (10) und mit einer Funktion zum kontrollierten Lastabwurf, die einen Anschluss an ein Stromversorgungsnetz (6), mindestens einen Ladeanschluss (7) für mindestens ein Elektrofahrzeug (10), eine zentrale Verarbeitungseinheit (3), und eine Empfängereinrichtung (4) aufweist,
wobei die zentrale Verarbeitungseinheit (3) dazu eingerichtet ist, ein wahlweises Reduzieren des Ladestroms eines an dem mindestens einen Ladeanschluss (7) angeschlossenen Elektrofahrzeugs (10) innerhalb einer vorbestimmten Zeitdauer zu bewirken,
**dadurch gekennzeichnet, dass** die Vorrichtung (1) weiterhin aufweist:
ein Relaiselement (5), das dazu eingerichtet ist, ein Steuersignal der Empfängereinrichtung (4) zu verarbeiten und an die zentrale Verarbeitungseinheit (3) weiterzugeben, um der Verarbeitungseinheit (3) zu signalisieren, dass der Ladestrom für die an den entsprechenden Ladeanschlüssen (7) angeschlossenen Elektrofahrzeuge (10) zu reduzieren ist,
wobei die Empfängereinrichtung (4) als Rundsteuerempfänger ausgebildet und dazu eingerichtet ist, ein niederfrequentes Rundsteuersignal eines Rundsteuersenders in einem Stromversorgungsnetz (6) zu empfangen, und
wobei die Verarbeitungseinheit (3) dazu eingerichtet ist, den Ladestrom an jedem Ladeanschluss (7) innerhalb der vorbestimmten Zeitdauer geordnet auf Null zu reduzieren.

2. Vorrichtung (1) nach Anspruch 1, **dadurch gekennzeichnet, dass** das Reduzieren des Ladestroms für jedes an dem mindestens einen Ladeanschluss (7) angeschlossene Elektrofahrzeug (10) unterschiedlich ist.

3. Vorrichtung (1) nach einem der vorhergehenden Ansprüche, **dadurch gekennzeichnet, dass** das Relaiselement (5) ein Halbleiterrelais ist.

4. Vorrichtung (1) nach einem der vorhergehenden Ansprüche, **dadurch gekennzeichnet, dass** die zentrale Verarbeitungseinheit (3) ein Mikrocontroller ist.

5. Vorrichtung (1) nach einem der vorhergehenden Ansprüche, **dadurch gekennzeichnet, dass** die Empfängereinrichtung (4) dazu eingerichtet ist, ein kabelgebundenes Steuersignal über ein Leitungsnetz gemäß einer Trägerfrequenztechnik wie Powerline Communication (PLC) zu empfangen.

6. Vorrichtung (1) nach einem Ansprüche 1 bis 4, **dadurch gekennzeichnet, dass** die Empfängereinrichtung (4) dazu eingerichtet ist ein kabelloses Steuersignal über ein Funknetz zu empfangen.

7. Vorrichtung (1) nach einem der vorhergehenden Ansprüche, **dadurch gekennzeichnet, dass** die Empfängereinrichtung (4) ein niederfrequentes Rundsteuersignal im Frequenzbereich von 110 Hz bis etwa 2000 Hz aus dem Stromversorgungsnetz empfängt.

8. Vorrichtung (1) nach einem der vorhergehenden Ansprüche, **dadurch gekennzeichnet, dass** ein Ausgangssignal des Relaiselements (5) eine Spannung von 3,5 V nicht überschreitet.

9. Vorrichtung (1) nach einem der vorhergehenden Ansprüche, **dadurch gekennzeichnet, dass** die zentrale Verarbeitungseinheit (3) räumlich getrennt von dem mindestens einen Ladeanschluss (7) ausgebildet ist und/oder dass der mindestens eine Ladeanschluss (7) als Wallbox ausgebildet ist.

10. Vorrichtung (1) nach einem der vorhergehenden Ansprüche, **dadurch gekennzeichnet, dass** die zentrale Verarbeitungseinheit (3) dazu eingerichtet ist, weitere Stromquellen und Stromverbraucher des Stromversorgungsnetzes (6) zu steuern.

## Claims

1. An apparatus (1) for charging electric vehicles (10) and having a function for controlled load shedding, which has a connection to a power supply grid (6), at least one charging connection (7) for at least one electric vehicle (10), a central processing unit (3) and a receiver device (4),
wherein the central processing unit (3) is configured to optionally reduce the charging current of an electric vehicle (10) connected to the at least one charging connection (7) within a predetermined period of time,
**characterized in that** the apparatus (1) further comprises:
a relay element (5) which is configured to process a control signal from the receiver device (4) and to forward it to the central processing unit (3), in order to signal to the processing unit (3) that the charging current for the electric vehicles (10) connected to the corresponding charging connections (7) is to be reduced,
wherein the receiver device (4) is designed as a ripple control receiver and configured to receive a low-frequency ripple control signal from a ripple control transmitter in a power supply grid (6), and
wherein the processing unit (3) is configured to reduce the charging current at each charging connection (7) to zero in an ordered manner within a predetermined period of time.

2. The apparatus (1) according to claim 1, **characterized in that** the reducing of the charging current is different for each electric vehicle (10) connected to the at least one charging connection (7).

3. The apparatus (1) according to one of the preceding claims, **characterized in that** the relay element (5) is a solid-state relay.

4. The apparatus (1) according to one of the preceding claims, **characterized in that** the central processing unit (3) is a microcontroller.

5. The apparatus (1) according to any one of the preceding claims, **characterized in that** the receiver device (4) is configured to receive a wired control signal via a line network in accordance with a carrier-frequency technology such as Powerline Communication (PLC).

6. The apparatus (1) according to any one of claims 1 to 4, **characterized in that** the receiver device (4) is configured to receive a wireless control signal via a radio network.

7. The apparatus (1) according to any one of the preceding claims, **characterized in that** the receiver device (4) receives a low-frequency ripple control signal in the frequency range of 110 Hz to about 2000 Hz from the power supply grid.

8. The apparatus (1) as claimed in any one of the preceding claims, **characterized in that** an output signal from the relay element (5) does not exceed a voltage of 3.5 V.

9. The apparatus (1) according to any one of the preceding claims, **characterized in that** the central processing unit (3) is designed to be spatially separate from the at least one charging connection (7) and/or that the at least one charging connection (7) is designed as a wall box.

10. The apparatus (1) according to any one of the preceding claims, **characterized in that** the central processing unit (3) is configured to control further power sources and power consumers of the power supply grid (6).

## Revendications

1. Dispositif (1) pour charger des véhicules électriques (10) et avec une fonction pour un délestage brusque contrôlé, qui comporte un raccordement à un réseau d'alimentation en courant (6), au moins un raccord de charge (7) pour au moins un véhicule électrique (10), une unité de traitement centrale (3) et un dispositif de réception (4),
sachant que l'unité de traitement centrale (3) est agencée pour causer une réduction sélective du courant de charge d'un véhicule électrique (10) raccordé à au moins un raccord de charge (7) à l'intérieur d'une période de temps prédéterminée,
**caractérisé en ce que** le dispositif (1) comporte en plus,
un élément de relais (5), qui est agencé pour traiter un signal de commande du dispositif de réception (4) et le transmettre à l'unité de traitement centrale (3) pour signaler à l'unité de traitement centrale (3) que le courant de charge est à réduire pour les véhicules électriques (10) raccordés aux raccords de charge (7) correspondants,
sachant que le dispositif de réception (4) est constitué comme récepteur de commande centralisé et est agencé pour recevoir un signal de commande centralisé basse fréquence d'un émetteur de commande centralisé dans un réseau d'alimentation en courant (6),
sachant que l'unité de traitement (3) est agencée pour réduire le courant de charge à chaque raccord de charge (7) à zéro à l'intérieur de la période de temps prédéterminée.

2. Dispositif (1) selon la revendication 1, **caractérisé en ce que** la réduction du courant de charge pour chaque véhicule électrique (10) raccordé à au moins un raccord de charge (7) est différente.

3. Dispositif (1) selon l'une quelconque des revendications précédentes, **caractérisé en ce que** l'élément de relais (5) est un relais à semiconducteurs.

4. Dispositif (1) selon l'une quelconque des revendications précédentes, **caractérisé en ce que** l'unité de traitement centrale (3) est un microcontrôleur.

5. Dispositif (1) selon l'une quelconque des revendications précédentes, **caractérisé en ce que** le dispositif de réception (4) est agencé pour recevoir un signal de commande par câble par un réseau de lignes selon une technique de fréquences porteuses comme la Communication par courants porteurs en ligne (CPL).

6. Dispositif (1) selon l'une quelconque des revendications 1 à 4, **caractérisé en ce que** le dispositif de réception (4) est agencé pour recevoir un signal de commande sans fil par un réseau radio.

7. Dispositif (1) selon l'une quelconque des revendications précédentes, **caractérisé en ce que** le dispositif de réception (4) reçoit du réseau d'alimentation en courant un signal de commande centralisé basse fréquence dans une gamme de fréquences de 110 Hz jusqu'à environ 2000 Hz.

8. Dispositif (1) selon l'une quelconque des revendications précédentes, **caractérisé en ce qu'**un signal de sortie de l'élément de relais (5) ne dépasse pas une tension de 3,5 V.

9. Dispositif (1) selon l'une quelconque des revendications précédentes, **caractérisé en ce que** l'unité de traitement central (3) est constituée séparée dans l'espace d'au moins un raccord de charge (7) et/ou **en ce qu'**au moins un raccord de charge (7) est constitué sous la forme d'un boîtier mural.

10. Dispositif (1) selon l'une quelconque des revendications précédentes, **caractérisé en ce que** l'unité de traitement central (3) est agencée pour commander d'autres sources de courant et consommateurs de courant du réseau d'alimentation en courant (6).
